# EUROPÄISCHE PATENTSCHRIFT

(11) **EP 4 439 753 B1**
(45) Veröffentlichungstag und Bekanntmachung des Hinweises auf die Patenterteilung: **14.01.2026**
(21) Anmeldenummer: 24159796.2
(22) Anmeldetag: 26.02.2024
(51) Int. Cl.: H01M 10/04

(54) **VERFAHREN ZUR PRÜFUNG EINES BATTERIEELEMENTESTAPELS BEZÜGLICH DER LAGE VON BATTERIEELEMENTSCHICHTEN**
METHOD FOR TESTING A STACK OF BATTERY ELEMENTS WITH RESPECT TO THE POSITION OF LAYERS OF BATTERY ELEMENTS
PROCÉDÉ DE CONTRÔLE D'UN EMPILEMENT D'ÉLÉMENTS DE BATTERIE PAR RAPPORT À LA POSITION DE COUCHES D'ÉLÉMENTS DE BATTERIE

(30) Priorität: 21.03.2023 DE 102023202492
(43) Veröffentlichungstag der Anmeldung: 02.10.2024
(73) Patentinhaber: PowerCo SE, 38239 Salzgitter (DE)
(72) Erfinder: Masuch, Steffen, 38118 Braunschweig (DE)
(74) Vertreter: FDST Patentanwälte

(56) Entgegenhaltungen:
- EP-A1- 3 826 090
- EP-A1- 4 113 107
- MASUCH STEFFEN ET AL: "Applications and Development of X-ray Inspection Techniques in Battery Cell Production", PROCESSES, vol. 11, no. 1, 21 December 2022 (2022-12-21), pages 10, XP093033314, DOI: 10.3390/pr11010010

## Beschreibung

Die Erfindung betrifft ein Verfahren zur Prüfung eines Stapels mehrerer Batterieelementschichten in Form von Anoden, Kathoden und Separatoren. Ein solcher Stapel, der auch als Elektroden-Separatoren-Verbund (ESV) bezeichnet wird, kann insbesondere als Bestandteil einer Batterie vorgesehen sein.

Bei der automatisierten Herstellung von Batterien werden Batterieelementschichten mittels Stapelmaschinen zu Stapeln gestapelt (vgl. US 2022/0216501 A1), wobei die Ablagegenauigkeit der Batterieelementschichten und insbesondere der Elektroden das Gütekriterium für die Prozessfähigkeit der Stapelmaschinen ist. Alle Kanten der polygonen und insbesondere rechteckigen Batterieelementschichten müssen einen definierten Abstand voneinander haben und in einem definierten Toleranzbereich liegen, um einerseits eine möglichst optimale elektrochemische Leistungsfähigkeit der Batterien zu gewährleisten und andererseits, um einen Kurzschluss zwischen benachbarten Elektroden infolge einer nicht ausreichend exakten Stapelung zu vermeiden. Ein solcher Kurzschluss könnte zu einem Ausfall der betroffenen Batterie führen.

Es kann vorgesehen sein, den Separator eines Stapels derart größer als die Anode und die Anode wiederum größer als die Kathode zu dimensionieren, dass sich über dem gesamten Umfang ein Überstand von beispielsweise 1 Millimeter zwischen Separator und Anode einerseits sowie Anode und Kathode andererseits ergibt, um unter Berücksichtigung der Ablagegenauigkeit aktuell genutzter Stapelmaschinen einen Kurzschluss zwischen benachbarten Elektroden infolge einer nicht ausreichend exakten Stapelung sicher zu vermeiden. Auch kann durch einen solchen Überstand eine verringerte chemische Leistungsfähigkeit der Stapel infolge einer ungenauen Positionierung der Elektroden vermieden werden. Eine solche toleranzbedingte Überdimensionierung der Anoden und Separatoren erhöht jedoch den Materialverbrauch bei der Herstellung der Stapel und damit die Kosten, den Raumbedarf und das Gewicht der Stapel und damit der Batterien. Es kann daher sinnvoll sein, solche toleranzbedingten Überdimensionierungen von Batterieelementschichten in Stapeln zu minimieren. Dazu sollte, um einen Kurzschluss zwischen benachbarten Elektroden infolge einer nicht ausreichend exakten Stapelung zu vermeiden, die Ablagegenauigkeit der für die Stapelung genutzten Stapelmaschinen erhöht und/oder die Qualitätssicherung im Rahmen der Herstellung der Stapel verbessert werden, so dass eine Herstellung kurzgeschlossener Stapel ausreichend sicher vermieden oder diese im Rahmen der Herstellung sicher aussortiert werden können.

Die WO 2016/114257 A1 offenbart ein Verfahren zur Überprüfung eines ESV unter Verwendung von Röntgenstrahlung. EP4113107A1 und EP3826090A1 beschreiben jeweils Verfahren zur Prüfung der Ausrichtung eines Stapels mehrerer Batterieelementschichten per in Stapelrichtung auf den Stapel ausgerichteter Röntgenstrahlung, wobei die relativen Überstände der Kanten auf einer Seite des Stapels analysiert werden.

Der Erfindung liegt die Aufgabe zugrunde, ein Verfahren zur Ermittlung der Ablagegenauigkeit von Batterieelementschichten eines Batterieelementstapels anzugeben, das bei ausreichender Genauigkeit möglichst einfach und/oder schnell durchführbar ist.

Diese Aufgabe ist bei einem Verfahren gemäß dem Patentanspruch 1 gelöst. Bevorzugte Ausführungsformen des erfindungsgemäßen Verfahrens sind Gegenstände der weiteren Patentansprüche und ergeben sich aus der nachfolgenden Beschreibung der Erfindung.

Erfindungsgemäß ist ein Verfahren zur Prüfung mindestens eines Stapels mehrerer Batterieelementschichten in Form von Anoden als erste Art von Elektroden, Kathoden als zweite Art von Elektroden und (die Anoden und die Kathoden separierenden und elektrisch isolierenden) Separatoren, wobei die Batterieelementschichten polygone und vorzugsweise rechteckige Großflächen aufweisen. Die Großflächen der Batterieelementschichten können zumindest teilweise unterschiedlichen Größen aufweisen. Die Batterieelementschichten sind in einer Stapelrichtung, die senkrecht zu den Großflächen ausgerichtet ist, gestapelt. Die Elektroden eines Batterieelements können sich zumindest hinsichtlich eines umfassten Aktivmaterials unterschieden, wodurch die als Anoden ausgestaltete Elektroden anodisch und die die als Kathoden ausgestaltete Elektroden kathodisch wirksam sind (jeweils bezogen auf ein Entladen der Batteriezelle).

Die Batterieelementschichten können vorzugsweise plattenförmig ausgestaltet sein. Als "plattenförmig" wird dabei ein Körper oder ein Abschnitt eines Körpers (z.B. bei einem mäanderförmigen Verlauf eines Separatorbands, wobei die zwischen den angrenzenden Elektroden gelegenen Abschnitte davon plattenförmige Separatoren darstellen) verstanden, der zwei (außenseitige) Großflächen aufweist, die sich in einer Längsrichtung und einer Breitenrichtung des Körpers erstrecken, wobei eine (maximale) Höhe des Körpers, Die dem (maximalen) Abstand der Großflächen entspricht, kleiner (insbesondere höchstens 1/10 oder 1/100 oder 1/100) als die (maximale) Länge und als die (maximale) Breite ist.

In einem ersten Ermittlungsschritt des Verfahrens werden Geometrien (d.h. geometrische Daten, insbesondere bezüglich der Formen und Abmessungen) zumindest einer der Großflächen zumindest der (aller) Anoden und/oder der (aller) Kathoden, gegebenenfalls zusätzlich der Separatoren, ermittelt. Dies erfolgt vorzugsweise in einem vereinzelten Zustand der Batterieelementschichten.

Das Ermitteln der Geometrien zumindest der Anoden und/oder der Kathoden kann vorzugsweise basierend auf dem Bild eines optischen Kamerasystems, d.h. mittels eines auf sichtbarem Licht basierenden, bilderzeugenden Systems, das eine oder mehrere Kameras umfasst, durchgeführt werden, was eine einfache und kostengünstige Durchführung des ersten Ermittlungsschritts ermöglicht. Dabei kann die Bilderfassung einer Kamera des Kamerasystems vorzugsweise in Aufsicht, d.h. mit "Blick" auf die Großflächen der Batterieelementschichten und besonders bevorzugt mit senkrechter Ausrichtung der optischen Achse der Kamera des Kamerasystems bezüglich dieser Großflächen, aufgenommen werden. Dies kann sich ebenfalls vorteilhaft hinsichtlich der Durchführung des ersten Ermittlungsschritts auswirken, weil dadurch ein möglichst großflächiger Abschnitt der Batterieelemente erfasst werden kann.

In einem Stapelschritt werden die Batterieelementschichten zu dem Stapel gestapelt. Dabei kann vorzugsweise vorgesehen sein, dass die Batterieelementschichten in einer definierten Reihenfolge zu dem Stapel gestapelt werden und/oder ermittelt und abgespeichert wird, in welcher Reihenfolge dies erfolgt. Der erste Ermittlungsschritt und der Stapelschritt können vorzugsweise zumindest teilweise gleichzeitig durchgeführt werden, indem beispielsweise jeweils von der auf den sich ausbildenden Stapel aufgelegten oder noch als nächstes aufzulegenden Batterieelementschicht die Geometrie der oben liegenden Großfläche ermittelt wird. Es kann jedoch auch vorgesehen sein, dass der Stapelschritt erst im Anschluss an den ersten Ermittlungsschritt durchgeführt wird.

Anschließend werden für eine Lageprüfung zumindest der Anoden und/oder der Kathoden, soweit diese in dem ersten Ermittlungsschritt geometrisch vermessen wurden, eine Mehrzahl von Verfahrensschritten durchgeführt. Erfolgt dabei eine Lageprüfung für die Anoden und die Kathoden, werden diese Verfahrensschritte jeweils für die Anoden einerseits und die Kathoden andererseits separat (aber vorzugsweise zumindest zeitweise gleichzeitig) durchgeführt.

Zunächst wird in einem zweiten Ermittlungsschritt der Stapel mittels Röntgenstrahlung bestrahlt, die von einem Röntgenstrahler ausgestrahlt und von einem Röntgendetektor detektiert wird, wobei die Röntgenstrahlung (d.h. zumindest ein Strahl, insbesondere der Zentralstrahl davon) senkrecht bezüglich der Großflächen der Batterieelementschichten ausgerichtet ist. Dabei wird eine Relativbewegung zwischen dem Stapel und der Röntgenstrahlung bewirkt, vorzugsweise, indem der Stapel bei ruhendem Röntgenstrahler und -detektor bewegt wird. Diese Relativbewegung kann vorzugsweise linear sein. Mittels der detektierten Röntgenstrahlung wird dann bezüglich zumindest eines Paars von sich gegenüberliegenden Seiten des Stapels der größte Kantenabstand, der zwischen den Kanten dieses Paars vorliegt, ermittelt. Ein Abstand wird dabei erfindungsgemäß grundsätzlich auf direktem beziehungsweise kürzest möglichem Weg bestimmt.

In einem ersten Prüfschritt wird dann überprüft, ob dieser größte Kantenabstand kleiner als ein erster Toleranzwert ist. Im negativen Fall, d.h. wenn der größte Kantenabstand nicht kleiner und damit gleich oder größer als der erste Toleranzwert ist, wird der Stapel als unzulässig bewertet. Im positiven Fall, d.h. wenn der größte Kantenabstand kleiner als der erste Toleranzwert ist, wird dagegen noch ein zweiter Prüfschritt durchgeführt.

In diesem zweiten Prüfschritt wird überprüft, ob der ermittelte größte Kantenabstand kleiner als ein Wert, der sich aus der Summe der kürzesten (geometrischen) Abmessung bezüglich der Ermittlungsrichtung (Verbindungsrichtung zwischen dem Paar der sich gegenüberliegenden Seiten des Stapels) aller der jeweiligen Elektroden (Anoden oder Kathoden) einerseits und der Differenz eines zweiten Toleranzwerts und dem halben Überstand andererseits ergibt, ist. Als Überstand wird dabei die Hälfte des Werts, um den der größte Kantenabstand kleiner als der erste Toleranzwert ist, definiert. Ergibt dieser zweite Prüfschritt ein negatives Prüfergebnis, d.h. der größte Kantenabstand ist nicht kleiner und damit gleich oder größer als der Wert, der sich aus der Summe der kürzesten Abmessung aller der jeweiligen Elektroden einerseits und der Differenz eines zweiten Toleranzwerts und dem halben Überstand andererseits ergibt, wird der Stapel als unzulässig bewertet. Ergibt der zweite Prüfschritt dagegen ein positives Prüfergebnis, d.h. der größte Kantenabstand ist kleiner als der Wert, der sich aus der Summe der kürzesten Erstreckung aller der jeweiligen Elektroden einerseits und der Differenz eines zweiten Toleranzwerts und dem halben Überstand andererseits ergibt, wird der Stapel als zulässig bewertet. Ein als zulässig bewerteter Stapel kann uneingeschränkt für eine Nutzung zur Herstellung einer Batterie vorgesehen sein.

Das erfindungsgemäße Verfahren zielt darauf ab, die Geometriedaten aus dem ersten Ermittlungsschritt vorteilhaft mit den Ermittlungsergebnissen aus dem zweiten Ermittlungsschritt zu verknüpfen, wobei die konkrete Auswertung gemäß den Prüfschritten ermöglicht, die Lagen aller Anoden und/oder Kathoden zu überprüfen. Dies ist trotz der relativ einfach gehaltenen Art der (senkrechten) Bestrahlung des Stapels mit der Röntgenstrahlung während des zweiten Ermittlungsschritts möglich. Diese Art der Bestrahlung kann nämlich dazu führen kann, dass durch eine Auswertung der von dem Röntgendetektor gemessenen Röntgenstrahlung nicht die Kanten aller dieser jeweiligen Elektroden exakt ermittelt werden können. Vielmehr wird trotz der Ermittlung von lediglich dem Abstand der am weitesten voneinander beanstandeten Kanten der jeweiligen Elektroden, die das ausgewählte Paar der Seiten des Stapels ausbildet, infolge der Verknüpfung mit den Geometriedaten sämtlicher der jeweiligen Elektroden (Anoden und/oder Kathoden) sowie der konkreten Auswertung gemäß den Prüfschritten mit relativ großer Genauigkeit gewährleistet, dass sämtliche der betrachteten Elektroden eine ausreichende Lagegenauigkeit aufweisen. Dies ermöglicht eine relativ schnelle Überprüfung des Stapels, weil der Stapel infolge der möglichen senkrechten Bestrahlung in einer schnellen und einfachen Art durch die Röntgenstrahlung bewegt werden kann.

Gemäß einer bevorzugten Ausführungsform des erfindungsgemäßen Verfahrens kann vorgesehen sein, dass in dem ersten Ermittlungsschritt, die Verläufe derjenigen Kanten oder Kantenabschnitte, die alle Ecken der jeweiligen Elektroden, d.h. Anoden oder Kathoden, bilden, ermittelt werden. Damit würde folglich die vollständige Geometrie der Großflächen dieser jeweiligen Elektroden ermittelt werden. Dies kann ermöglichen, ein ausreichend exaktes Prüfergebnisse für den gesamten Stapel auch dann zu erreichen, wenn der erste Ermittlungsschritt lediglich für einen Teil der Batterieelementschichten, beispielsweise ausschließlich für die Kathoden und/oder Anoden durchgeführt wird. Grundsätzlich kann es aber auch ausreichend sein, dass in dem ersten Ermittlungsschritt, die Verläufe derjenigen Kanten oder Kantenabschnitten, die nur einen Teil der Ecken der jeweiligen Elektroden bilden, ermittelt werden.

Zur Erzielung eines möglichst sicheren Prüfergebnisses für den Stapel kann vorzugsweise vorgesehen sein, dass der zweite Ermittlungsschritt und die diesem nachfolgenden Prüfschritte für mindestens oder exakt zwei Paare von sich gegenüberliegenden Seiten des Stapels durchgeführt werden. Bezogen auf die bevorzugte Ausgestaltung der Batterieelementschichten mit quadratischen Großflächen wird folglich die Ermittlung und Prüfung einerseits für die jeweiligen Kombinationen der Kanten, die den größten Abstand bezüglich der Längen der jeweiligen Elektroden begrenzen und andererseits für den größten Abstand bezüglich der Breiten der jeweiligen Elektroden durchgeführt. Damit kann eine besonders genaue Prüfung bezüglich der Lagen der Batterieelementschichten zueinander durchgeführt werden, was dennoch durch lediglich zwei einfache lineare Relativbewegungen zwischen dem Stapel und der Röntgenstrahlung realisiert werden kann. Die Durchführung des zweiten Ermittlungsschritts und des ersten und des zweiten Prüfschritts kann für die mindestens oder exakt zwei Paare nacheinander durchgeführt werden, so dass der Stapel beispielweise zunächst entlang einer Längsrichtung des Stapels relativ zu der Röntgenstrahlung bewegt wird und anschließend, nach einer Rotation um beispielsweise 90° um die Stapelrichtung, entlang einer Breitenrichtung relativ zu der Röntgenstrahlung bewegt wird. Eine gleichzeitig Erfassung der Kanten beider Paare kann aber ebenfalls umgesetzt werden.

Gemäß einer bevorzugten Ausführungsform des erfindungsgemäßen Verfahrens kann vorgesehen sein, dass nur eine Art der Elektroden, insbesondere die Kathoden, gemäß dem zweiten Ermittlungsschritt und gemäß dem ersten und dem zweiten Prüfschritt geprüft werden. Dies kann darin begründet sein, dass für diese Art der Elektroden aufgrund des konkreten strukturellen Aufbaus basierend auf den Bildern, die durch Auswertung der von dem Röntgendetektor detektierten Röntgenstrahlung ermittelt werden können, die Lagen nicht aller Kanten exakt beziehungsweise eindeutig ermittelt werden können, was in einem relativ stark ausgeprägten Absorptionsverhalten für die Röntgenstrahlung begründet sein kann.

Für die relativen Lagen der anderen Art der Elektroden, insbesondere der Anoden, kann dagegen eine einfachere und/oder genauere Art der Auswertung vorgesehen sein. Hierzu kann in einem weiteren Ermittlungs- und Prüfschritt des erfindungsgemäßen Verfahrens, der gegebenenfalls als Teil des zweiten Ermittlungsschritts beziehungsweise gleichzeitig mit dem zweiten Ermittlungsschritt durchgeführt werden kann, der Stapel mittels (der) Röntgenstrahlung bestrahlt werden, die von einem/dem Röntgenstrahler ausgestrahlt und von einem/dem Röntgendetektor detektiert wird, wobei die Röntgenstrahlung senkrecht bezüglich der Großflächen der Batterieelementschichten ausgerichtet ist und wobei mittels der detektierten Röntgenstrahlung bezüglich zumindest einer Seite des Stapels der größte Kantenabstand, der zwischen den dieser Seite des Stapels zugeordneten Kanten von allen Elektroden dieser Art vorliegt, ermittelt und daraufhin geprüft wird, ob dieser Kantenabstand kleiner als ein dritter Toleranzwert ist. Ergibt sich dabei ein negatives Ergebnis, d.h. der größte Kantenabstand ist nicht kleiner sondern dieser ist gleich oder größer als der dritte Toleranzwert, wird der Stapel als unzulässig oder als Ausschuss bewertet. Ein als Ausschuss bewerteter Stapel kann insbesondere als abschließend ungeeignet für eine weitere Nutzung bei der Herstellung einer Batterie angesehen werden. Bei einem positiven Ergebnis wird der Stapel dagegen als zulässig bewertet. Vorzugsweise wird der weitere Ermittlungs- und Prüfschritt für alle Seiten des Stapels, zumindest jedoch für diejenigen Seiten des Stapels, die zumindest zwei der in Stapelrichtung verlaufenden Kanten des Stapels begrenzen, durchgeführt, um ein möglichst genaues Prüfergebnis zu realisieren.

Das Vorgehen gemäß dem zweiten Ermittlungsschritt und dem ersten und zweiten Prüfschritt basiert auf einer Vereinfachung des Ermittlungsergebnisses. Diese Vereinfachung basiert darauf, dass für die Bewertung stets angenommen wird, dass die hinsichtlich der Abmessung zwischen den Kanten eines Paars kleinste aller jeweiligen Elektroden eine der Kanten stellt, die den größten Kantenabstand dieses Paars bestimmt. Die kleinste Elektrode wurde dabei im Rahmen des ersten Ermittlungsschritts ermittelt. Dadurch kann sich eine Bewertung des Stapels als unzulässig ergeben, die tatsächlich nicht gegeben ist, weil eben nicht die kleinste der Elektroden eine der Kanten, die den größten Kantenabstand definiert, stellt. Die Vereinfachung ist demnach derart gewählt, dass eine gewisse Ungenauigkeit lediglich bezüglich einer Bewertung des Stapels als unzulässig besteht.

Demnach kann es vorteilhaft sein, einen Stapel, der insbesondere in dem zweiten Ermittlungsschritt und dem ersten und zweiten Prüfschritten, gegebenenfalls aber auch in dem weiteren Ermittlungs- und Prüfschritt als unzulässig bewertet wurde, erneut zu prüfen. Hierzu kann vorzugsweise vorgesehen sein, dass der Stapel in einem dritten Prüfschritt, sofern dieser als unzulässig bewertet wurde, ergänzend bezüglich der Einhaltung mindestens eines Toleranzbereichs geprüft wird, wobei im negativen Fall der Stapel als Ausschuss und im positiven Fall der Stapel als zulässig bewertet wird.

In dem dritten Prüfschritt kann der Stapel vorzugsweise mittels Röntgenstrahlung bestrahlt werden, die von einem Röntgenstrahler ausgestrahlt und von einem Röntgendetektor detektiert wird, wobei die Ausrichtung des Stapels relativ zu der Röntgenstrahlung derart gewählt wird, dass zumindest eine entlang der Stapelrichtung verlaufende Kante des Stapels vollständig in zumindest zwei unterschiedlichen Positionen in dem von der Röntgenstrahlung abgedeckten Raum erfasst und darauf basierend die relativen Lagen der diese Kante des Stapels ausbildenden Ecken (bzw. der diese Ecken begrenzenden Kantenabschnitte) der Batterieelementschichten ermittelt werden. Dieses Vorgehen kann demjenigen bei einer konventionellen Computertomographie ähneln oder entsprechen.

Gemäß einer bevorzugten Ausführungsform des erfindungsgemäßen Verfahrens kann vorgesehen sein, dass während des Stapelns oder nach dem Stapeln der Batterieelementschichten im Rahmen des Stapelschritts die Batterieelementschichten auf das Vorliegen eines Knicks überprüft werden, da ein solcher Knick das Ergebnis hinsichtlich der Prüfung des Stapels verfälschen könnte. Als Knick ist dabei ein abgewinkelter Verlauf, insbesondere ein um mindestens 45° oder mindestens 90° abgewinkelter Verlauf der Großfläche einer Batterieelementschicht verstanden. Dabei kann der Winkel dieses Verlaufs auch ca. 0°/360° betragen, wodurch zwei Abschnitte dieser Batterieelementschicht in etwa parallel verlaufen. Eine solche Knickprüfung kann auch gleichzeitig mit dem ersten Ermittlungsschritt durchgeführt und insbesondere auch, durch eine Nutzung desselben Vorrichtung (insbesondere ein optisches Kamerasystem), in den ersten Ermittlungsschritt integriert werden.

Die Knickprüfung kann vorzugsweise durch ein Ermitteln und Auswerten von Geometrien der Batterieelementschichten und/oder durch ein Ermitteln und Auswerten der Geometrie des Stapels durchgeführt werden.

Das Ermitteln der Geometrien der Batterieelementschichten im Rahmen der Knickprüfung und/oder das Ermitteln der Geometrie des Stapels kann ebenfalls vorteilhaft mittels eines optischen Kamerasystem durchgeführt werden. Dabei kann das Bild des Kamerasystems vorzugsweise in einer Aufsicht bezüglich der Großflächen der Batterieelementschichten aufgenommen werden kann. Eine solche Ausrichtung des Kamerasystems bezüglich der Batterieelementschichten kann insbesondere dann vorgesehen sein, wenn die Geometrien der einzelnen Batterieelementschichten jeweils nach dem Auflegen oder während des Auflegens auf den auszubildenden Stapel ermittelt werden. Alternativ kann vorgesehen sein, dass für das Ermitteln der Geometrien der Batterieelementschichten in dem ausgebildeten Stapel das Bild des Kamerasystems in einer Seitenansicht bezüglich des Stapels aufgenommen wird.

Ein Ermitteln der Geometrie des Stapels kann insbesondere ein Ermitteln der Höhen des Stapels, d.h. die Erstreckungen des Stapels entlang der Stapelrichtung, an mehreren Stellen umfassen, was auf relativ einfache und kostengünstige Weise auch mechanisch erfolgen kann.

Die im Rahmen eines erfindungsgemäßen Verfahrens genutzten Batterieelemente können vorzugsweise derart ausgestaltet sein, dass jeweils die Großflächen der Anoden größer als die Großflächen der Kathoden und/oder die Großflächen der Separatoren größer als die Großflächen der Kathode und vorzugsweise auch größer als die Großflächen der Anoden sind. Durch die unterschiedlich große Ausgestaltung der Großflächen der verschiedenen Batterieelementschichten sollte jeweils ein allseitiger Überstand der relativ großen Batterieelementschichten (Separator und Anode) gegenüber der jeweils nächstkleineren Batterieelementschicht realisiert sein. Dadurch kann eine vorteilhafte Durchführung insbesondere des zweiten Ermittlungsschritts und des gegebenenfalls vorgesehenen weiteren Ermittlungs- und Prüfschritts ermöglicht werden, was auf den unterschiedlichen Absorptionsverhalten dieser verschiedenen Batterieelementschichten für Röntgenstrahlung beruhen kann. Diese unterschiedlichen Absorptionsverhalten können in den unterschiedlichen Materialien, aus denen die verschiedenen Batterieelementschichten ausgestaltet sind, begründet sein. Dabei kann das Absorptionsverhalten der Kathoden am höchsten und dasjenige der Separatoren am geringsten sein.

Die Erfindung wird nachfolgend anhand von in den Zeichnungen dargestellten Ausgestaltungs- und Ausführungsbeispielen näher erläutert. In den Zeichnungen zeigt, jeweils in vereinfachter Darstellung:
- Fig. 1:: einen Querschnitt durch einen Abschnitt eines Stapels aus Batterieelementschichten in Form von Anoden, Kathoden und Separatoren;
- Fig. 2:: Ablagebereiche für die Kathoden, Anoden und Separatoren des Stapels;
- Fig. 3:: eine vereinzelte Batterieelementschicht des Stapels und ein Kamerasystem gemäß einer ersten Variante zur Verwendung in dem ersten Ermittlungsschritt eines erfindungsgemäßen Verfahrens;
- Fig. 4:: eine vereinzelte Batterieelementschicht des Stapels und ein Kamerasystem gemäß einer zweiten Variante zur Verwendung in dem ersten Ermittlungsschritt eines erfindungsgemäßen Verfahrens;
- Fig. 5:: den Stapel und ein Kamerasystem gemäß einer ersten Variante zur Verwendung bei einer Knickprüfung eines erfindungsgemäßen Verfahrens;
- Fig. 6:: den Stapel und ein Kamerasystem gemäß einer zweiten Variante zur Verwendung bei einer Knickprüfung eines erfindungsgemäßen Verfahrens;
- Fig. 7:: in einer Seitenansicht den Stapel und ein mechanisches Messsystem zur Verwendung bei einer Knickprüfung eines erfindungsgemäßen Verfahrens;
- Fig. 8:: den Stapel und das Messsystem gemäß der Fig. 7 in einer Aufsicht;
- Fig. 9:: den Stapel und ein Röntgensystem zur Verwendung in dem zweiten Ermittlungsschritt eines erfindungsgemäßen Verfahrens;
- Fig. 10 bis 14:: verschiedene Stellungen des Stapels relativ zu einem Röntgendetektor eines Röntgensystems;
- Fig. 15:: Darstellung von Abmessungen zu den Kathoden des Stapels;
- Fig. 16:: den Stapel und ein Röntgensystem zur Verwendung in einem dritten Prüfschritt eines erfindungsgemäßen Verfahrens und
- Fig. 17:: ein Bild von einem Abschnitt des Stapels, erstellt mittels des Röntgensystems gemäß der Fig. 16.

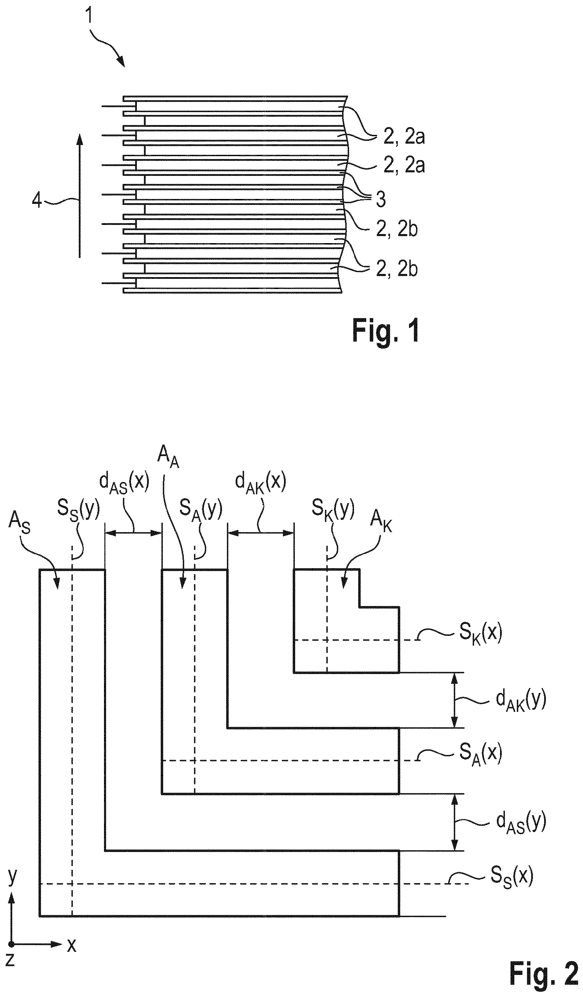

Im Rahmen einer Batteriezellenfertigung können Stapel 1, die entlang einer Stapelrichtung 4 in abwechselnder Reihenfolge Batterieelementschichten in Form von plattenförmige Elektroden 2 und elektrisch isolierenden, plattenförmigen Separatoren 3, umfassen, hergestellt werden. Die Elektroden 2 sind dabei wiederum abwechselnd in Ausgestaltungen und Anordnungen, die vorgesehenen Verwendungen als Anoden 2a und Kathoden 2b entsprechen, in dem Stapel 1 angeordnet. Die Elektroden 2 und die Separatoren 3 weisen rechteckige Großflächen auf, wobei die Großflächen der Anoden 2a, der Kathoden 2b und der Separatoren 3 unterschiedlich groß sind, um trotz Ungenauigkeiten bei der Stapelung, die zumindest noch innerhalb entsprechender Toleranzbereiche liegen, einen Kurzschluss zwischen benachbarten Anoden 2a und Kathoden 2b sowie zu große Verluste hinsichtlich der elektrischen Leistungsfähigkeit der herzustellenden Batterie zu vermeiden. Gemäß der Fig. 1 kann vorgesehen sein, dass die Kathoden 2b die kleinsten Großflächen und die Separatoren 3 die größten Großflächen aufweisen, wodurch sich ein vollumfänglicher (d.h. sowohl bezüglich der Breiten als auch der Längen der Batterieelementschichten vorliegender) randseitiger Überstand einerseits der Anoden 2a bezüglich der Kathoden 2b und andererseits der Separatoren 3 bezüglich der Anoden 2a (und damit auch der Kathoden 2b) ergibt.

Die plattenförmigen Separatoren 3 können zumindest teilweise auch Abschnitte eines mäanderförmig geführten Separatorstreifens (nicht gezeigt) sein. Auch können die überstehenden Randbereiche benachbarter Separatoren 3 verklebt sein.

Die Fig. 2 zeigt mögliche Vorgaben für eine ausreichend genaue Stapelung der Batterieelementschichten für eine der insgesamt vier entlang der Stapelrichtung 4 verlaufenden Kanten des Stapels 1, wobei diese Vorgaben für alle dieser Kanten erfüllt sein sollten. Demnach kann jeweils ein Ablagebereich A_{A}, A_{K}, A_{S} für sämtliche der Anoden 2a, der Kathoden 2b und der Separatoren 3 vorgesehen sein, innerhalb derer die Kanten dieser verschiedenen Arten der Batterieelementschichten liegen sollen. Zusätzlich dazu ist für jede der verschiedenen Arten der Batterieelementschichten die optimale Lage S_{A}, S_{K}, S_{S} bezüglich der jeweiligen Breite und Länge dargestellt, wobei diese optimale Lage S_{A}, S_{K}, S_{S} jeweils mittig innerhalb des jeweiligen Ablagebereichs A_{A}, A_{K}, A_{S} verläuft. Die Breiten der Ablagebereiche A_{A}, A_{K}, A_{S} können beispielsweise jeweils 1,0 mm beziehungsweise ±0,5 mm beidseitig der jeweiligen optimalen Lage S_{A}, S_{K}, S_{S} betragen. Zusätzlich zu den verschiedenen Ablagebereichen A_{A}, A_{K}, A_{S} für die unterschiedlichen Arten der Batterieelementschichten aller Batterieelemente eines Stapels 1 kann als Vorgabe für eine ausreichend genaue Stapelung zudem ein minimaler Abstand d_{AK}, d_{AS} zwischen den verschiedenen Ablagebereichen A_{A}, A_{K}, A_{S} vorgesehen sein. Der minimale Abstand d_{AK} zwischen dem Ablagebereich A_{A} für die Anoden 2a und dem Ablagebereich A_{K} für die Kathoden 2b sowie der minimale Abstand d_{AS} zwischen dem Ablagebereich A_{A} für die Anoden 2a und dem Ablagebereich A_{S} für die Separatoren 3 kann beispielsweise jeweils 0,8 mm betragen. Über die Kette, die diese beiden minimalen Abstände d_{AK}, d_{AS} sowie die Breite des Ablagebereichs A_{A} für die Anoden 2a umfasst, ergibt sich damit auch ein minimaler Abstand zwischen dem Ablagebereich A_{K} für die Kathoden 2b und dem Ablagebereich A_{S} für die Separatoren 3.

Das erfindungsgemäße Verfahren ermöglicht durch eine Kombination von mehreren Ermittlungs- und Prüfschritten eine möglichst einfache und schnelle Prüfung des Stapels 1 hinsichtlich ausreichend genauer Lagen zumindest der Elektroden 2 des Stapels 1.

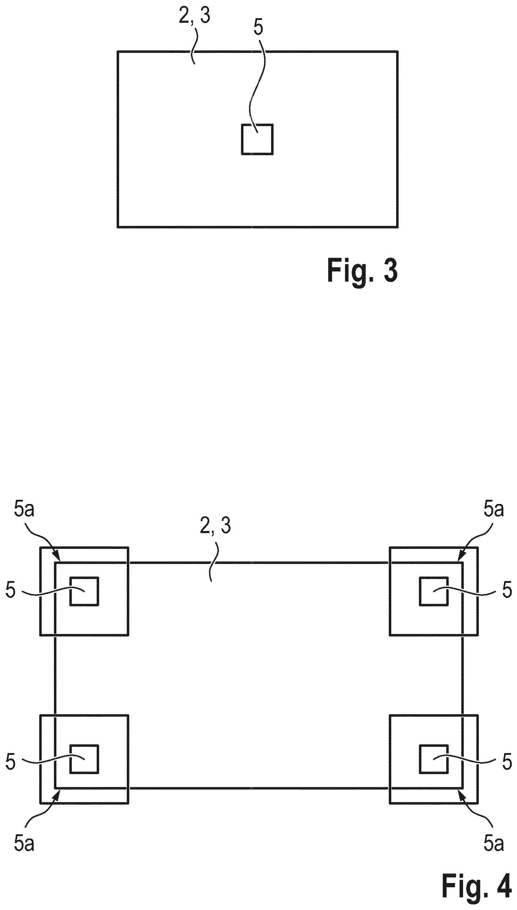

In einem ersten Ermittlungsschritt des Verfahrens werden Geometrien jeweils einer der Großflächen aller Batterieelementschichten ermittelt. Dies erfolgt unter Verwendung eines optischen Kamerasystems in Aufsicht (vgl. Fig. 3 und 4), mittels dessen jeweils mindestens ein Bild der vereinzelten Batterieelementschichten aufgenommen und ausgewertet wird. Eine erste Lichtquelle (nicht dargestellt) kann dabei vorzugsweise auf derselben Seite bezüglich der vereinzelten Batterieelementschichten wie mindestens eine Kamera 5 des Kamerasystems und eine zweite Lichtquelle (nicht dargestellt) auf der gegenüberliegenden Seite bezüglich der vereinzelten Batterieelementschichten angeordnet sein.

Sofern der Erfassungsbereich 5a der mindestens einen verwendeten Kamera 5 groß genug ist, können die vereinzelten Batterieelementschichten auch ohne Relativbewegung zu dieser Kamera 5 vollständig erfasst werden. Zur Realisierung einer relativ großen Auflösung kann aber auch vorgesehen sein, die vereinzelten Batterieelementschichten und die mindestens eine Kamera 5 relativ zueinander zu bewegen, wobei von der mindestens einen Kamera 5 jeweils nur Abschnitte der Batterieelementschichten erfasst werden. Eine relativ große Auflösung ohne Relativbewegung kann bei einer Verwendung mehrerer Kameras 5, die dann jeweils einen Erfassungsbereich 5a aufweisen können, der kleiner als die Großflächen der Batterieelementschichten ist, erreicht werden. Fig. 4 zeigt diesbezüglich ein Ausführungsbeispiel, bei dem jeweils eine Kamera 4 jeder der vier Ecken der vereinzelten Batterieelementschichten zugeordnet ist.

Vorzugsweise gleichzeitig mit oder aber nach der Ermittlung der Geometrien der vereinzelten Batterieelementschichten in dem ersten Ermittlungsschritt werden die Batterieelementschichten in einem Stapelschritt des Verfahrens in einer definierten Anzahl und optional auch in einer nachvollzogenen Reihenfolge zu dem Stapel 1 gestapelt.

Während des Stapelns oder nach dem Stapeln der Batterieelementschichten werden diese zudem auf das Vorliegen eines Knicks überprüft. Dies kann ebenfalls unter Verwendung eines Kamerasystems erfolgen. Dieses kann vorzugsweise dasselbe Kamerasystem sein, das bei dem ersten Ermittlungsschritt zum Einsatz kommt. Es kann sich jedoch auch um ein davon unterscheidendes Kamerasystem handeln. Unterschiedliche Kamerasysteme können beispielsweise dann sinnvoll verwendet werden, wenn Rahmen einer Serienprüfung mehrerer Stapel diese mehreren Stapel gleichzeitig unterschiedlichen der hinsichtlich der einzelnen Stapel sequenziell ablaufenden Ermittlungs- und Prüfschritte unterzogen werden.

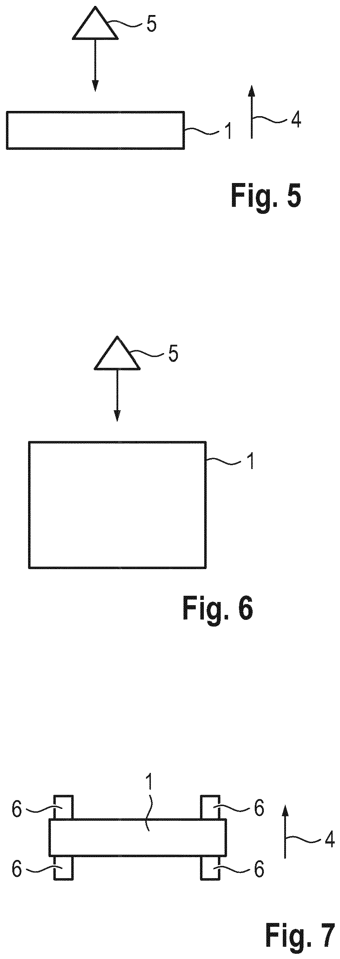

Die Fig. 5 bis 8 zeigen verschiedene Möglichkeiten für die Durchführung einer Knickprüfung. Für eine Knickprüfung gemäß den Fig. 5 und 6 kommt jeweils ein Kamerasystem zum Einsatz.

Bei dem Kamerasystem gemäß der Fig. 5 ist die Kamera 5 für die Aufnahme von Bildern in Aufsicht auf die Großflächen der Batterieelementschichten positioniert. Mittels der Kamera können dadurch - vergleichbar zu dem Vorgehen gemäß dem ersten Ermittlungsschritt - die Geometrien der Großfläche der Batterieelementschichten des (auszubildenden) Stapels 1 ermittelt und dabei auf das Vorliegen eines Knicks (nicht gezeigt) überprüft werden. Dabei kann vorteilhaft ein Vergleich mit den zuvor in dem ersten Ermittlungsschritt ermittelten Geometriedaten für die jeweiligen Batterieelementschichten durchgeführt werden. Dies ist jedoch nicht zwingend erforderlich, weil ein Knick in einer Batterieelementschicht üblicherweise zu einer so großen Geometrieabweichung führt, dass die Knickprüfung auch auf einem Vergleich der dabei ermittelten Geometrie mit einer für alle Batterieelementschichten einer Art definierten Referenzgeometrie ausreichend sein kann. Da bei der Aufnahme der Bilder in Aufsicht nicht die Geometrien sämtlicher Batterieelementschichten eines Stapels 1 vollständig erfasst werden können, ist vorgesehen, die Knickprüfung unter Verwendung eines Kamerasystems gemäß der Fig. 5 sequenziell für die einzelnen Batterieelementschichten während des Stapelns durchzuführen, d.h. es wird jeweils für diejenige der Batterieelementschichten, die während des Stapelns auf den sich ausbildenden Stapel 1 aufgelegt wird, zumindest ein Bild mittels der Kamera 5 erfasst, bevor eine weitere Batterieelementschicht auf den Stapel 1 aufgelegt wird.

Bei dem Kamerasystem gemäß der Fig. 6 ist die Kamera 5 dagegen für die Aufnahme von Bildern in einer Seitenansicht bezüglich des Stapels 1 angeordnet. Dadurch können gleichzeitig die Verläufe aller Batterieelementschichten in der entsprechenden Seitenansicht ermittelt und auf das Vorliegen eines Knicks (nicht gezeigt) überprüft werden. Für eine möglichst vollständige Knickprüfung sollten dabei Bilder von zumindest zwei sich gegenüberliegenden Seiten des Stapels 1 erstellt und ausgewertet werden, wozu das Kamerasystem zumindest zwei Kameras 5 (nicht gezeigt) umfassen kann. Alternativ kann aber auch eine Relativrotation zwischen dem Stapel 1 und dem Kamerasystem derart vorgesehen sein, dass nacheinander mehrere Seiten des Stapels durch das Bild einer einzelnen Kamera 5 erfasst werden. Da mittels des Kamerasystems gemäß der Fig. 6 gleichzeitig sämtliche der Batterieelementschichten auf das Vorliegen eines Knicks überprüft werden können, kann eine entsprechende Knickprüfung vorteilhaft an dem bereits vollständig ausgebildeten Stapel 1 durchgeführt werden.

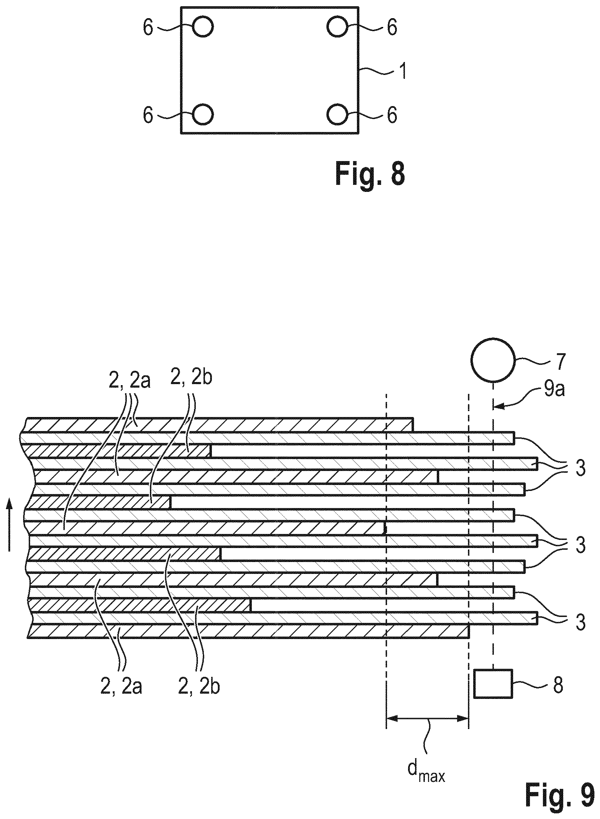

Die Knickprüfung gemäß den Fig. 7 und 8 darauf beruht, die jeweilige Höhe des Stapels 1 an mehreren Messpunkten zu ermitteln. Dies kann beispielsweise mechanisch mittels eines Messtasters 6 erfolgen. Dabei ist vorteilhaft jeweils mindestens eine Messstelle jeder der entlang der Stapelrichtung 4 verlaufenden Kanten des Stapels 1 zugeordnet beziehungsweis in der Nähe dieser Kante angeordnet, da insbesondere die diese Kanten ausbildenden Ecken der Batterieelementschichten beim Stapeln einer Knickgefahr ausgesetzt sind.

An den Stapelschritt mit der Knickprüfung anschließend wird ein zweiter Ermittlungsschritt durchgeführt. Bei diesem wird der Stapel 1 mittels Röntgenstrahlung 9 bestrahlt, die von einem Röntgenstrahler 7 ausgestrahlt und von einem Röntgendetektor 8 detektiert wird (vgl. Fig. 9). Dabei ist vorgesehen, dass die Röntgenstrahlung 9 senkrecht bezüglich der Großflächen der Batterieelementschichten ausgerichtet ist, wobei sich die senkrechte Ausrichtung auf einen Zentralstrahl 9a der Röntgenstrahlung 9 bezieht, die sich konisch beziehungsweise kegelförmig von dem Röntgenstrahler 7 ausbreitet.

Durch eine Auswertung der mittels des Röntgendetektors 8 detektierten Röntgenstrahlung werden, soweit möglich, die Lagen von Kanten zumindest der Anoden 2a und der Kathoden 2b ermittelt.

Da die Anoden 2a einerseits größer als die Kathoden 2b und andererseits eine nur mittlere Absorption der Röntgenstrahlung bewirken, ist es möglich, aus der von dem Röntgendetektor 8 erfassten Röntgenstrahlung die Lagen sämtlicher der Kanten der Anoden 2a zu ermitteln, da für diese Kanten in den entsprechenden Bildern ein ausreichender Kontrast vorliegt. Die nur sehr geringe Absorption der Röntgenstrahlung durch die Separatoren 3, die noch größere Großflächen als die Anoden 2a aufweisen, behindert diese Auswertung nicht wesentlich.

Für eine Lageprüfung der Anoden 2a wird aus den ermittelten Lagen der Kanten der Anoden 2a gemäß einem weiteren Ermittlungs- und Prüfschritt des Verfahrens der jeweils größte Abstand dₘₐₓ (vgl. Fig. 9), der zwischen denjenigen Kanten aller Anoden 2a, die die einzelnen Seiten des Stapels 1 bilden, vorliegt, ermittelt und zudem geprüft, ob dieser größte Abstand dₘₐₓ. jeweils kleiner als ein (dritter) Toleranzwert ist. Dabei kann dieser (dritte) Toleranzwert auch für die verschiedenen Seiten des Stapels 1 unterschiedlich sein. Ist diese Voraussetzung jeweils **erfüllt,** wird der Stapel 1 als zulässig bewertet. Ist dies nicht der Fall, wird der Stapel 1 als unzulässig oder als Ausschuss bewertet.

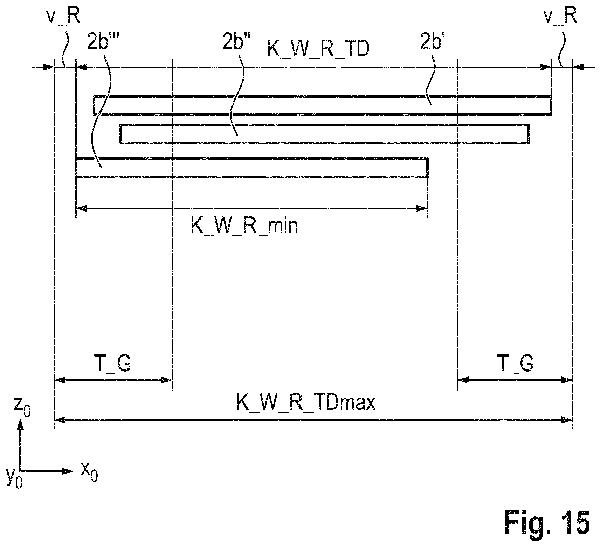

Für die Kathoden 2b ist eine Lageprüfung, wie sie für die Anoden 2a vorgesehen ist, nicht ohne weiteres möglich, da die Lagen von Kanten, die durch andere der Kathoden 2b überdeckt sind, aufgrund der relativ starken Absorption der Röntgenstrahlung durch die Kathoden 2b nicht oder nicht eindeutig erkennbar sind. Dies gilt vor allem für eine Kante einer der Kathoden 2b, die von allen anderen Kathoden 2b bezüglich der Ausrichtung zu dem Röntgenstrahler 7 überlagert ist. Das Verfahren sieht daher vor, in dem zweiten Ermittlungsschritt aus den detektierten Röntgenstrahlungen für beide Paare von sich gegenüberliegenden Seiten des Stapels 1 jeweils den größten Kantenabstand (K_W_R_TD), der zwischen allen Kanten der Kathoden 2b der einzelnen Paare vorliegt, zu ermitteln. Dies ist in der Fig. 15 veranschaulicht. Sofern die Anoden 2a so ausgestaltet sind, dass die für diese beschriebene Lageprüfung nicht durchführbar ist, kann das für die Kathoden 2b beschriebene Verfahren auch vorteilhaft für die Anoden 2a zur Anwendung kommen.

In der Fig. 15 sind zur Vereinfachung lediglich drei Kathoden 2b des Stapels1 dargestellt. Eine erste Kathode 2b' davon weist die größte Abmessung (Länge oder Breite) bezüglich der Erstreckung des Stapels 1 zwischen den Seiten eines konkreten Paars auf. Dabei kann diese erste Kathode 2b' bezüglich dieser Abmessung größer als eine zweite Kathode 2b" sein, die diesbezüglich einem definierten Nennmaß entsprechen kann. Ein dritte Kathode 2b‴ ist dagegen hinsichtlich der betrachteten Abmessung am kleinsten (von allen Kathoden 3b des Stapels). Aufgrund einer zumindest teilweisen Überdeckung der Kanten der zweiten Kathode 2b" und der dritten Kathode 2b‴ durch die erste Kathode 2b‴ für die Röntgenstrahlung kann eine eindeutige Ermittlung dieser überdeckten Kanten verhindert sein. Aus diesem Grund basiert der zweite Ermittlungsschritt und sich diesem anschließende erste und zweite Prüfschritte auf einer Vereinfachung des Ermittlungsergebnisses. Diese Vereinfachung ist jedoch derart gewählt, dass eine Ungenauigkeit lediglich bezüglich einer Bewertung des Stapels 1 als unzulässig besteht, so dass als zulässig beurteilte Stapel stets alle Anordnungen bezüglich der Lagegenauigkeit zumindest der Elektroden 2 erfüllen.

Hierzu ist vorgesehen, dass in einem ersten Prüfschritt überprüft wird, ob der größte Kantenabstand (K_W_R_TD), der zwischen den Kanten der Kathoden 2b eines konkreten Paars der Seiten des Stapels 1 vorliegt, kleiner als ein erster Toleranzwert (K_W_R_TDmax) ist, wobei der Stapel 1 im negativen Fall (K_W_R_TD ≥ K_W_R_TDmax) als unzulässig bewertet wird und im positiven Fall (K_W_R_TD < K_W_R_TDmax) ein zweiter Prüfschritt durchgeführt wird.

In dem zweiten Prüfschritt wird überprüft, ob der größte Kantenabstand (K_W_R_TD) kleiner als ein Wert, der sich aus der Summe der kürzesten Abmessung (Länge oder Breite) aller Kathoden des Stapels bezüglich der Ermittlungsrichtung einerseits (K_W_R_min) und der Differenz eines zweiten Toleranzwerts (T_G) und dem halben Überstand (v_R) andererseits ergibt, ist. Als Überstand (v_R) wird dabei die Hälfte des Werts, um den der größte Kantenabstand (K_W_R_TD) kleiner als der erste Toleranzwert (K_W_R_TDmax) ist, definiert. Der zweite Toleranzwert (T _G) kann dabei einer maximalen Lageabweichung (in Richtung der Erstreckung zwischen den Seiten des betrachteten Paars), die für die Kanten der Kathoden 2b als zulässig definiert wurde, entsprechen. Ergibt dieser zweite Prüfschritt ein negatives Prüfergebnis (K_W_R_TD ≥ (T_G - v_R) + K_W_R_min) wird der Stapel als unzulässig bewertet. Ergibt der zweite Prüfschritt dagegen ein positives Prüfergebnis (K_W_R_TD < (T _G - v_R) + K_W_R_min), wird der Stapel als zulässig bewertet.

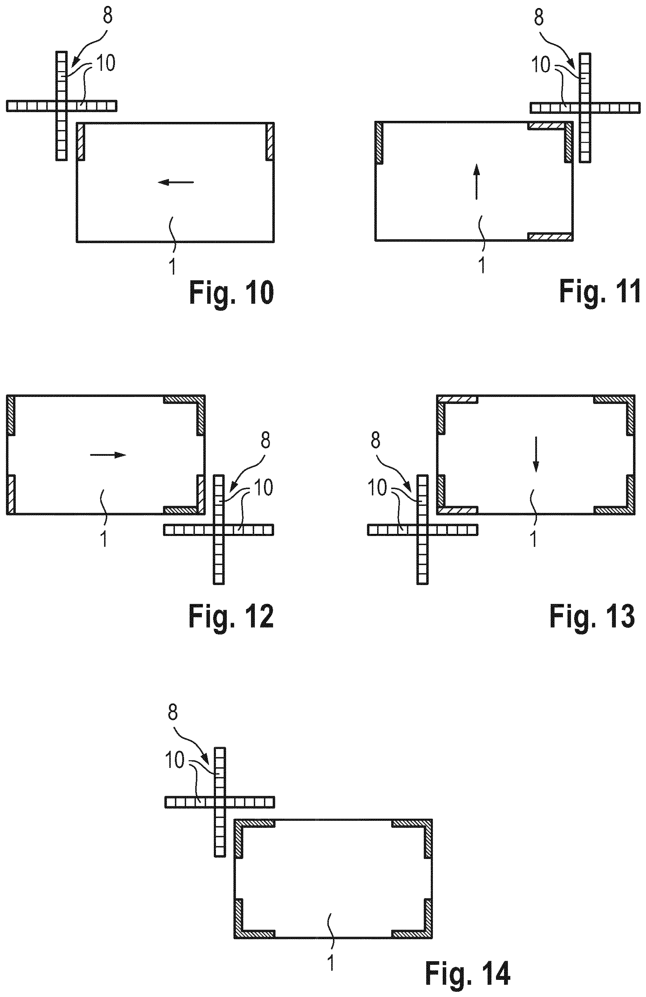

Für die Ermittlung der Lagen der Kanten im Rahmen des zweiten Ermittlungsschritts und des weiteren Ermittlungs- und Prüfschritts ist es nicht erforderlich, diese über ihrer gesamten Länge mit der Röntgenstrahlung zu erfassen. Vielmehr können nacheinander jeweils zwei unterschiedliche Abschnitte der Kanten ermittelt (vgl. Fig. 10 bis 14) und die diesbezüglichen Teilergebnisse miteinander zur Ermittlung eines einzelnen Kantenverlaufs verknüpft werden. Hierzu kann der Stapel 1 beispielsweise gemäß den Fig. 10 bis 14 gezielt durch linienförmige Erfassungsbereiche von zwei Zeilendetektoren 10, die in Kombination den Röntgendetektor 8 darstellen, bewegt werden. In den Fig. 10 bis 14 sind solche Kantenabschnitte, die in dem jeweiligen Erfassungsschritt noch erfasst werden, mit einer rechtsgerichteten Schraffur und solche, die bereits zuvor erfasst wurden, mit einer linksgerichteten Schraffur dargestellt. Durch die Bewegung des Batterieelementestapels 1 durch die Erfassungsbereiche der Zeilendetektoren 10 wird ein flächiger Erfassungsbereich erhalten. Dieser ermöglicht auch die gleichzeitige Erfassung der Kanten, die beiden Paaren von sich gegenüberliegenden Seiten des Stapels 1 zugeordnet sind. Die Zeilendetektoren 10 sind bei der Ausführungsform gemäß den Fig. 10 bis 14 senkrecht zueinander und kreuzförmig angeordnet. Andere Anordnungen, beispielweise L-förmig, sind ebenfalls möglich. Die Bewegung des Stapels 1 ist jeweils senkrecht bezüglich des Erfassungsbereichs von einem der Zeilendetektoren 10 ausgerichtet.

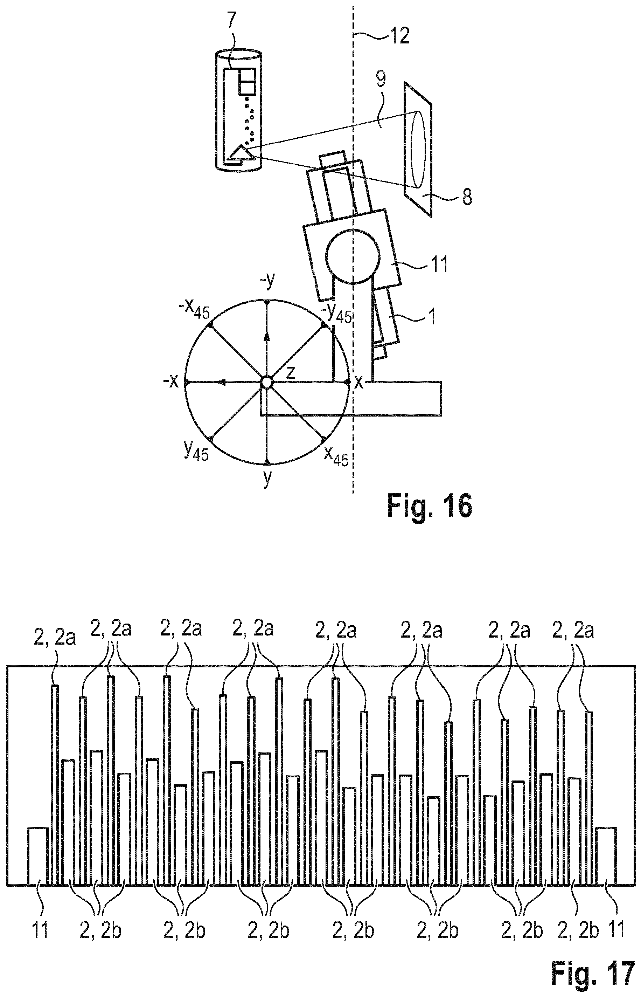

Aufgrund der Vereinfachung des Ermittlungsergebnisses des zweiten Ermittlungsschritts ist vorgesehen, einen Stapel 1, der in dem zweiten Ermittlungsschritt und den dazugehörigen ersten und zweiten Prüfschritten als unzulässig bewertet wurde, ergänzend in einem dritten Prüfschritt zu prüfen, wobei diesbezüglich eine aufwändigere Prüfung in der Art einer Computertomografie durchgeführt wird. Hierzu wird der Stapel 1 gemäß der Fig. 16, fixiert in einem Werkstückträger 11, derart in dem Bereich einer Röntgenstrahlung 9 positioniert, dass zumindest eine entlang der Stapelrichtung 4 verlaufende Kante des Stapels 1 erfasst wird. Durch eine Rotation des Stapels 1 um eine Rotationsachse 12 werden Verschattungen der Röntgenstrahlung 9 durch diese Kante in einer Vielzahl von Positionen des Stapels ermittelt und darauf basierend die relativen Lagen der diese Kante des Stapels 1 ausbildenden Ecken der Batterieelementschichten ermittelt. Die Fig. 17 zeigt diesbezüglich ein Beispielbild, das basierend auf der erfassten Röntgenstrahlung 9 von einem Abschnitt des Stapels 1, der die betrachtete Kante umfasst, erzeugt wurde.

Vorzugsweise wird dieser dritte Prüfschritt für mindestens zwei der Kanten des Stapels 1 durchgeführt, wobei bei nur zwei überprüften Kanten diese diagonal zueinander in dem Stapel 1 liegen sollten.

Basierend auf den in dem dritten Prüfschritt ermittelten Lagen der Kanten wird dann noch geprüft, ob diese in einem definierten Toleranzbereich liegen, wobei im negativen Fall der Stapel 1 als Ausschuss und im positiven Fall der Stapel 1 als zulässig bewertet wird. Der dritte Prüfschritt dient demnach einer Verifizierung dahingehend, ob ein Stapel 1, der in dem zweiten Ermittlungsschritt und den dazugehörigen ersten und zweiten Prüfschritten als unzulässig und damit als potentiell ungeeignet für eine Nutzung zur Herstellung einer Batterie ermittelt wurde, auch tatsächlich ungeeignet und damit Ausschuss ist oder dieser lediglich aufgrund der Vereinfachung, die den ersten und zweiten Prüfschritten zugrunde liegt, als unzulässig eingestuft wurde. Eine solche Einstufung kann dann durch den dritten Prüfschritt revidiert werden, so dass verhindert wird, dass für eine Herstellung von Batterien geeignete Stapel 1 als Ausschuss behandelt werden.

### Bezugszeichenliste

- 1: Stapel
- 2: Elektrode
- 2a: Anode
- 2b: Kathode
- 2b': erste Kathode
- 2b": zweite Kathode
- 2b‴: dritte Kathode
- 3: Separator
- 4: Stapelrichtung
- 5: Kamera
- 5a: Erfassungsbereich der Kamera
- 6: Messtaster
- 7: Röntgenstrahler
- 8: Röntgendetektor
- 9: Röntgenstrahlung
- 9a: Zentralstrahl der Röntgenstrahlung
- 10: Zeilendetektor
- 11: Werkstückträger
- 12: Rotationsachse

- A_{A}: Ablagebereich für die Anoden
- A_{K}: Ablagebereich für die Kathoden
- A_{S}: Ablagebereich für die Separatoren
- S_{A}: optimale Lage einer Kante einer Anode
- S_{K}: optimale Lage einer Kante einer Kathode
- S_{S}: optimale Lage einer Kante eines Separators
- d_{AK}: minimaler Abstand zwischen den Kanten einer Anode und einer Kathode eines Batterieelements
- d_{AS}: minimaler Abstand zwischen den Kanten einer Anode und eines Separators eines Batterieelements
- dₘₐₓ: größter Abstand zwischen gleich gelegenen Kanten aller Anoden
- K_W_R_TD: größter Kantenabstand der Kathoden bezüglich eines Paars von Seiten des Stapels
- K_W_ R_TDmax: erster Toleranzwert
- K_W_ R_min: kürzeste Abmessung der Kathoden bezüglich des Paars von Seiten des Stapels
- T_G: zweiter Toleranzwert
- v_R: Überstand

## Patentansprüche

1. Verfahren zur Prüfung eines Stapels (1) mehrerer Batterieelementschichten in Form von Anoden (2a) als erste Art von Elektroden (2), Kathoden (2b) als zweite Art von Elektroden (2) und Separatoren (3), wobei die Batterieelementschichten polygone Großflächen aufweisen und entlang einer Stapelrichtung (4), die senkrecht zu den Großflächen ausgerichtet ist, gestapelt sind, wobei
• in einem ersten Ermittlungsschritt Geometrien zumindest einer der Großflächen zumindest der Anoden (2a) und/oder der Kathoden (2b) ermittelt werden, wobei die Geometrien geometrische Daten umfassen,
• in einem Stapelschritt die Batterieelementschichten zu dem Stapel (1) gestapelt werden,
• anschließend für eine Lageprüfung der Anoden (2a) und/oder der Kathoden (2b)
- in einem zweiten Ermittlungsschritt der Stapel (1) mittels Röntgenstrahlung (9) bestrahlt wird, die von einem Röntgenstrahler (7) ausgestrahlt und von einem Röntgendetektor (8) detektiert wird, wobei die Röntgenstrahlung (9) senkrecht bezüglich der Großflächen der Batterieelementschichten ausgerichtet ist, und mittels der detektierten Röntgenstrahlung bezüglich zumindest eines Paars von sich gegenüberliegenden Seiten des Stapels (1) der größte Kantenabstand (K_W_R_TD), der zwischen den Kanten der betrachteten Art der Elektroden dieses Paars vorliegt, ermittelt wird,
- in einem ersten Prüfschritt überprüft wird, ob dieser größte Kantenabstand (K_W_R_TD) kleiner als ein erster Toleranzwert (K_W_R_TDmax) ist, wobei
∘ im negativen Fall der Stapel (1) als unzulässig bewertet wird und
∘ im positiven Fall ein zweiter Prüfschritt durchgeführt wird, wobei
- in dem zweiten Prüfschritt
∘ als Überstand (v_R) die Hälfte des Werts, um die der größte Kantenabstand (K_W_R_TD) kleiner als der erste Toleranzwert (K_W_R_TDmax) ist, definiert wird und
∘ überprüft wird, ob der größte Kantenabstand (K_W_R_TD) kleiner als ein Wert, der sich aus der Summe einer kürzesten Abmessung (K_W_R_min) bezüglich einer Ermittlungsrichtung aller der betrachteten Art der Elektroden (2) einerseits und der Differenz eines zweiten Toleranzwerts (T_G) und dem halben Überstand (v_R) andererseits ergibt, ist, wobei
▪ im negativen Fall der Stapel (1) als unzulässig bewertet wird und
▪ im positiven Fall der Stapel (1) als zulässig bewertet wird.

2. Verfahren gemäß Anspruch 1, **dadurch gekennzeichnet, dass** in dem ersten Ermittlungsschritt, die Lagen derjenigen Kanten, die alle Ecken oder nur einen Teil der Ecken der betrachteten Art der Elektroden (2) bilden, ermittelt werden.

3. Verfahren gemäß Anspruch 1 oder 2, **dadurch gekennzeichnet, dass** der zweite Ermittlungsschritt und die ersten und zweiten Prüfschritte für mindestens zwei Paare von sich gegenüberliegenden Seiten des Stapels (1) durchgeführt werden.

4. Verfahren gemäß einem der vorhergehenden Ansprüche, **dadurch gekennzeichnet, dass** nur eine Art der Elektroden (2) gemäß dem zweiten Ermittlungsschritt und den ersten und zweiten Prüfschritten geprüft werden und in einem weiteren Ermittlungs- und Prüfschritt der Stapel (1) mittels Röntgenstrahlung (9) bestrahlt wird, die von einem/dem Röntgenstrahler (7) ausgestrahlt und von einem/dem Röntgendetektor (8) detektiert wird, wobei die Röntgenstrahlung (9) senkrecht bezüglich der Großflächen der Batterieelementschichten ausgerichtet ist, und mittels der detektierten Röntgenstrahlung bezüglich zumindest einer Seite des Stapels (1) der größte Abstand (dₘₐₓ), der zwischen den dieser Seite des Stapels (1) zugeordneten Kanten von allen Elektroden (2) der anderen Art vorliegt, ermittelt und daraufhin geprüft wird, ob dieser Abstand (dₘₐₓ) jeweils kleiner als ein dritter Toleranzwert ist, wobei
• im negativen Fall der Stapel (1) als unzulässig oder als Ausschuss bewertet wird und
• im positiven Fall der Stapel (1) als zulässig bewertet wird.

5. Verfahren gemäß einem der vorhergehenden Ansprüche, **dadurch gekennzeichnet, dass** in einem dritten Prüfschritt der Stapel (1), sofern dieser als unzulässig bewertet wurde, ergänzend bezüglich der Einhaltung mindestens eines Toleranzbereichs geprüft wird, wobei
• im negativen Fall der Stapel (1) als Ausschuss bewertet wird und
• im positiven Fall der Stapel (1) als zulässig bewertet wird.

6. Verfahren gemäß Anspruch 5, **dadurch gekennzeichnet, dass** in dem dritten Prüfschritt der Stapel (1) mittels Röntgenstrahlung (9) bestrahlt wird, die von einem/dem Röntgenstrahler (7) ausgestrahlt und von einem/dem Röntgendetektor (8) detektiert wird, wobei die Ausrichtung des Stapels (1) relativ zu der Röntgenstrahlung (9) derart gewählt wird, dass zumindest eine entlang der Stapelrichtung (4) verlaufende Kante des Stapels (1) vollständig in zumindest zwei unterschiedlichen Positionen von der Röntgenstrahlung (9) erfasst und darauf basierend die relativen Lagen der diese Kante des Stapels (1) ausbildenden Ecken zumindest der Anoden (2a) und/oder der Kathoden (2b) ermittelt werden.

7. Verfahren gemäß einem der vorhergehenden Ansprüche, **dadurch gekennzeichnet, dass** nach dem Stapeln der Batterieelementschichten in dem Stapelschritt die Batterieelementschichten auf das Vorliegen eines Knicks überprüft werden.

8. Verfahren gemäß Anspruch 7, **dadurch gekennzeichnet, dass** die Knickprüfung durch ein Ermitteln und Auswerten von Geometrien der Batterieelementschichten und/oder durch ein Ermitteln und Auswerten der Geometrie des Stapels (1) durchgeführt wird.

9. Verfahren gemäß einem der vorhergehenden Ansprüche, **dadurch gekennzeichnet, dass** das Ermitteln der Geometrien der Batterieelementschichten und/oder das Ermitteln der Geometrie des Stapels (1) mittels eines optischen Kamerasystem durchgeführt wird.

10. Verfahren gemäß Anspruch 9, **dadurch gekennzeichnet, dass** das Bild des Kamerasystems in einer Aufsicht bezüglich der Großflächen der Batterieelementschichten aufgenommen wird.

11. Verfahren gemäß Anspruch 8 und 10, **dadurch gekennzeichnet, dass** die Geometrien der Batterieelementschichten jeweils nach dem Auflegen auf den sich ausbildenden Stapel (1) ermittelt werden.

12. Verfahren gemäß Anspruch 8 und 9, **dadurch gekennzeichnet, dass** für das Ermitteln der Geometrien der Batterieelementschichten in dem ausgebildeten Stapel (1) das Bild des Kamerasystems in einer Seitenansicht bezüglich des Stapels (1) aufgenommen wird.

13. Verfahren gemäß Anspruch 8, **dadurch gekennzeichnet, dass** das Ermitteln der Geometrie des Stapels (1) ein Ermitteln der Höhen des Stapels (1) an mehreren Stellen umfasst.

14. Verfahren gemäß Anspruch 13, **dadurch gekennzeichnet, dass** das Ermitteln der Höhen mechanisch erfolgt.

## Claims

1. Method for checking a stack (1) of several battery element layers in the form of anodes (2a) as the first type of electrodes (2), cathodes (2b) as the second type of electrodes (2) and separators (3), wherein the battery element layers have large polygonal surfaces and are stacked along a stacking direction (4) which is oriented perpendicular to the large surfaces, wherein
• in a first determination step, geometries of at least one of the large surfaces of at least the anodes (2a) and/or the cathodes (2b) are determined, wherein the geometries comprise geometric data,
• in a stacking step, the battery element layers are stacked to form the stack (1),
• subsequently, for checking the position of the anodes (2a) and/or the cathodes (2b),
- in a second determination step, the stack (1) is irradiated by X-ray radiation (9), which is emitted by an X-ray radiator (7) and detected by an X-ray detector (8), wherein the X-ray radiation (9) is oriented perpendicularly with respect to the large surfaces of the battery element layers, and the largest edge distance (K_W_R_TD), which is present between the edges of the considered type of electrodes of this pair, is determined by means of the detected X-ray radiation with respect to at least one pair of opposite sides of the stack (1),
- in a first checking step, a check is made as to whether this largest edge distance (K_W_R_TD) is less than a first tolerance value (K_W_R_TDmax), wherein
∘ in the negative case the stack (1) is assessed as impermissible and
∘ in the positive case a second checking step is carried out, wherein
- in the second checking step,
o half of the value by which the largest edge distance (K_W_R_TD) is less than the first tolerance value (K_W_R_TDmax) is defined as the projection (v_R), and
o a check is made as to whether the largest edge distance (K_W_R_TD) is less than a value given by the sum of a shortest dimension (K_W_R_min) with respect to a determination direction of all of the considered type of electrodes (2) on the one hand and the difference between a second tolerance value (T_G) and half the projection (v_R) on the other hand, wherein
▪ in the negative case the stack (1) is assessed as impermissible and
▪ in the positive case the stack (1) is assessed as permissible.

2. Method according to Claim 1, **characterized in that**, in the first determination step, the positions of those edges that form all corners or only some of the corners of the considered type of electrodes (2) are determined.

3. Method according to Claim 1 or 2, **characterized in that** the second determination step and the first and second checking steps are carried out for at least two pairs of opposite sides of the stack (1).

4. Method according to any of the preceding claims, **characterized in that** only one type of electrodes (2) according to the second determination step and the first and second checking steps are checked and in a further determination and checking step the stack (1) is irradiated by X-ray radiation (9), which is emitted by a/the X-ray radiator (7) and detected by a/the X-ray detector (8), wherein the X-ray radiation (9) is oriented perpendicularly with respect to the large surfaces of the battery element layers, and the largest distance (dₘₐₓ), which is present between the edges of all electrodes (2) of the other type, the edges being associated with this side of the stack (1), is determined by means of the detected X-ray radiation with respect to at least one side of the stack (1) and a check is then made as to whether this distance (dₘₐₓ) is less than a third tolerance value, wherein
• in the negative case the stack (1) is assessed as impermissible or as scrap and
• in the positive case the stack (1) is assessed as permissible.

5. Method according to any of the preceding claims, **characterized in that**, in a third checking step, the stack (1), if it has been assessed as impermissible, is additionally checked with regard to compliance with at least one tolerance range, wherein
• in the negative case the stack (1) is assessed as scrap and
• in the positive case the stack (1) is assessed as permissible.

6. Method according to Claim 5, **characterized in that**, in the third checking step, the stack (1) is irradiated by X-ray radiation (9), which is emitted by a/the X-ray radiator (7) and detected by a/the X-ray detector (8), wherein the orientation of the stack (1) relative to the X-ray radiation (9) is selected in such a way that at least one edge of the stack (1) running along the stack direction (4) is completely detected in at least two different positions by the X-ray radiation (9) and, based on this, the relative positions of the corners of at least the anodes (2a) and/or the cathodes (2b), the corners forming this edge of the stack (1), are determined.

7. Method according to any of the preceding claims, **characterized in that**, after stacking the battery element layers in the stacking step, the battery element layers are checked for the presence of a bend.

8. Method according to Claim 7, **characterized in that** the bending check is carried out by determining and assessing geometries of the battery element layers and/or by determining and assessing the geometry of the stack (1).

9. Method according to any of the preceding claims, **characterized in that** determining the geometries of the battery element layers and/or determining the geometry of the stack (1) are/is carried out by means of an optical camera system.

10. Method according to Claim 9, **characterized in that** the image from the camera system is captured in a top view with respect to the large surfaces of the battery element layers.

11. Method according to Claims 8 and 10, **characterized in that** the geometries of the battery element layers are determined after each battery element layer is placed on the stack (1) being formed.

12. Method according to Claims 8 and 9, **characterized in that**, for determining the geometries of the battery element layers in the formed stack (1), the image from the camera system is captured in a side view with respect to the stack (1).

13. Method according to Claim 8, **characterized in that** determining the geometry of the stack (1) comprises determining the height of the stack (1) at several points.

14. Method according to Claim 13, **characterized in that** determining the heights is performed mechanically.

## Revendications

1. Procédé pour tester un empilement (1) de plusieurs couches d'éléments de batterie sous forme d'anodes (2a) comme premier type d'électrodes (2), de cathodes (2b) comme deuxième type d'électrodes (2) et de séparateurs (3), dans lequel les couches d'éléments de batterie présentent de grandes surfaces polygonales et sont empilées le long d'une direction d'empilement (4) orientée perpendiculairement aux grandes surfaces, dans lequel
• lors d'une première étape de détermination, les géométries d'au moins l'une des grandes surfaces d'au moins les anodes (2a) et/ou les cathodes (2b) sont déterminées, les géométries comprenant des données géométriques,
• lors d'une étape d'empilement, les couches d'éléments de batterie sont empilées pour former l'empilement (1),
• après cela, pour effectuer un test de position des anodes (2a) et/ou des cathodes (2b),
- lors d'une deuxième étape de détermination, l'empilement (1) est irradié au moyen d'un rayonnement X (9) rayonné par une source de rayons X (7) et détecté par un détecteur de rayons X (8), le rayonnement X (9) étant orienté perpendiculairement aux grandes surfaces des couches d'éléments de batterie, et la plus grande distance entre arêtes (K_W_R_TD), qui est présente entre les arêtes du type d'électrodes considéré de cette paire, est déterminée au moyen du rayonnement X détecté par rapport à au moins une paire de côtés mutuellement opposés de l'empilement (1),
- lors d'une première étape de test, il est vérifié si cette plus grande distance entre arêtes (K_W_R_TD) est inférieure à une première valeur de tolérance (K_W_R_TDmax), dans lequel
∘ dans le cas négatif, l'empilement (1) est considéré comme non admissible et
∘ dans le cas positif, une deuxième étape de test est effectuée, lors de laquelle
- lors de la deuxième étape de test
∘ la moitié de la valeur dont la plus grande distance entre arêtes (K_W_R_TD) est inférieure à la première valeur de tolérance (K_W_R_TDmax) est définie comme étant un dépassement (v_R) et
∘ il est vérifié si la plus grande distance entre arêtes (K_W_R_TD) est inférieure à une valeur résultant de la somme d'une dimension la plus petite (K_W_R_min) par rapport à une direction de détermination de tous les types d'électrodes (2) considérés, d'une part, et de la différence entre une deuxième valeur de tolérance (T_G) et la moitié du dépassement (v_R), d'autre part
▪ dans le cas négatif, l'empilement (1) est considéré comme non admissible et
▪ dans le cas positif, l'empilement (1) est considéré comme admissible.

2. Procédé selon la revendication 1, **caractérisé en ce que** les positions des arêtes qui forment tous les coins ou seulement une partie des coins du type d'électrodes (2) considéré sont déterminées lors de la première étape de détermination.

3. Procédé selon la revendication 1 ou 2, **caractérisé en ce que** la deuxième étape de détermination et les première et deuxième étapes de test sont effectuées pour au moins deux paires de côtés opposés de l'empilement (1).

4. Procédé selon l'une quelconque des revendications précédentes, **caractérisé en ce qu'**un seul type d'électrodes (2) est testé selon la deuxième étape de détermination et les première et deuxième étapes de test et, lors d'une autre étape de détermination et de test, l'empilement (1) est irradié au moyen d'un rayonnement X (9), qui est rayonné par une source de rayons X (7) et détecté par un détecteur de rayons X (8), le rayonnement X (9) étant orienté perpendiculairement aux grandes surfaces des couches d'éléments de batterie, et la plus grande distance (dₘₐₓ) qui existe entre les arêtes de toutes les électrodes (2) de l'autre type qui sont associées à ce côté de l'empilement (1) est déterminée au moyen du rayonnement X détecté par rapport à au moins un côté de l'empilement (1), puis il est vérifié si cette distance (dₘₐₓ) est respectivement inférieure à une troisième valeur de tolérance, dans lequel
• dans le cas négatif, l'empilement (1) est considéré comme non admissible ou comme rejet et
• dans le cas positif, l'empilement (1) est considéré comme admissible.

5. Procédé selon l'une quelconque des revendications précédentes, **caractérisé en ce que**, lors d'une troisième étape de test, l'empilement (1), s'il a été considéré non admissible, est en outre testé en ce qui concerne le respect d'au moins une plage de tolérance,
• dans le cas négatif, l'empilement (1) est considéré comme rejet et
• dans le cas positif, l'empilement (1) est considéré comme admissible.

6. Procédé selon la revendication 5, **caractérisé en ce que**, lors de la troisième étape de test, l'empilement (1) est irradié au moyen d'un rayonnement X (9), qui est rayonné par une source de rayons X (7) et détecté par un détecteur de rayons X (8), l'orientation de l'empilement (1) par rapport au rayonnement X (9) étant sélectionnée de telle sorte qu'au moins un arête de l'empilement (1) s'étendant le long de la direction d'empilement (4) soit entièrement détectée en au moins deux positions différentes par le rayonnement X (9) et que les positions relatives des coins d'au moins les anodes (2a) et/ou des cathodes (2b) formant cette arête de l'empilement (1) soient déterminées sur la base de ces positions.

7. Procédé selon l'une quelconque des revendications précédentes, **caractérisé en ce qu'**après l'empilement des couches d'éléments de batterie lors de l'étape d'empilement, les couches d'éléments de batterie sont testées pour vérifier la présence d'un coude.

8. Procédé selon la revendication 7, **caractérisé en ce que** le test de présence d'un coude est effectué par détermination et évaluation des géométries des couches d'éléments de batterie et/ou par détermination et évaluation de la géométrie de l'empilement (1).

9. Procédé selon l'une quelconque des revendications précédentes, **caractérisé en ce que** la détermination des géométries des couches d'éléments de batterie et/ou la détermination de la géométrie de l'empilement (1) est effectuée au moyen d'un système de caméra optique.

10. Procédé selon la revendication 9, **caractérisé en ce que** l'image issue du système de caméra est enregistrée en vue de dessus par rapport aux grandes surfaces des couches d'éléments de batterie.

11. Procédé selon les revendications 8 et 10, **caractérisé en ce que** les géométries des couches d'éléments de batterie sont respectivement déterminées après leur mise en place sur l'empilement (1) formé.

12. Procédé selon les revendications 8 et 9, **caractérisé en ce que**, pour déterminer les géométries des couches d'éléments de batterie dans l'empilement (1) réalisé, l'image issue du système de caméra est enregistrée en vue latérale par rapport à l'empilement (1).

13. Procédé selon la revendication 8, **caractérisé en ce que** la détermination de la géométrie de l'empilement (1) comprend la détermination des hauteurs de l'empilement (1) en plusieurs points.

14. Procédé selon la revendication 13, **caractérisé en ce que** les hauteurs sont déterminées mécaniquement.
